## Europäisches Patentamt
## European Patent Office
## Office européen des brevets

(19)

(11) Veröffentlichungsnummer : **0 160 186**
**B1**

(12)

# EUROPÄISCHE PATENTSCHRIFT

(45) Veröffentlichungstag der Patentschrift :
20.09.89

(51) Int. Cl.⁴ : **B 60 L 13/04**

(21) Anmeldenummer : **85102791.2**

(22) Anmeldetag : **12.03.85**

(54) **Magnetausbildung für einen Langstatorantrieb.**

(30) Priorität : 30.03.84 DE 3411895

(43) Veröffentlichungstag der Anmeldung :
06.11.85 Patentblatt 85/45

(45) Bekanntmachung des Hinweises auf die Patenterteilung : 20.09.89 Patentblatt 89/38

(84) Benannte Vertragsstaaten :
DE FR GB IT

(73) Patentinhaber : **Thyssen Industrie AG**
**Am Thyssenhaus 1**
**D-4300 Essen 1 (DE)**

(72) Erfinder : **Meins, Jürgen, Dr. Ing.**
**Alte Poststrasse 18c**
**D-8011 Baldham (DE)**

(74) Vertreter : **Eberhard, Friedrich, Dr. et al**
**Am Thyssenhaus 1**
**D-4300 Essen 1 (DE)**

(56) Entgegenhaltungen :
DE–A– 2 163 832
GB–A– 1 457 262
IEE PROCEEDINGS SECTION A,I, Band 129, Nr. 8,
November 1982, Seiten 549-581, Old Woking, Surrey,
GB; B.V. JAYAWANT et al.: "Electromagnetic suspension and levitation"
REGELUNGSTECHNIK, vol. 26, no. 8, August 1978,
Seiten 258-265, München, DE; W. VOLLSTEDT et al.:
"Regelung eines elektromagnetischen Schwebefahrzeugs mit integriertem Antriebs-, Trag- und
Führungssystem"

## Beschreibung

Die Erfindung betrifft einen Wechselpolmagnet mit einem Joch und Magnetpolen für die Erzeugung der Tragkraft für ein Magnetschwebefahrzeug gegenüber einem Langstator mit mehreren, quer zur Längsstatorrichtung quer verlaufenden Nuten, die an ihrer dem Langstator gegenüberliegenden Polebene offen sind und in denen die Leiter der Magnetspulen verlegt sind.

Bei bekannten Magnetpolen umschließen die in einer Nut des Magneten liegenden Leiter die beiden benachbarten Magnetpole als Spule. Der Eisenkreis des Magneten ist dabei geblecht ausgeführt, um einer magnetischen Flußänderung einen geringen Widerstand entgegenzusetzen. Die zeitliche Strom- bzw. Flußänderung und damit auch die Kraftänderung ist hierbei begrenzt durch die Induktivität der Magnetspulen und die den Strom treibende Spannung, wobei die Induktivität proportional ist dem Quadrat der in der Magnetnut angeordneten, gesamten Windungszahl. Bei Magnetschwebefahrzeugen wird das Fahrzeug durch Regelung der Anziehungskraft der Magnete in der Schwebe gehalten. Die begrenzte Stellkraft in Verbindung mit der Masse der bekannten Magnete zwingt dazu, mit großen Abständen zwischen den Magneten und dem Langstator, gegen den die Anziehungskraft wirkt, zu arbeiten. Dadurch müssen die Magnete groß dimensioniert werden mit den Nachteilen eines hohen Investitionsaufwandes, großer Masse der Magnete, die wegen der größeren Trägheitskräfte einer empfindlichen Regelung der Lage der Magnete zusätzlich entgegenwirkt und eines hohen Leistungsbedarfs und entsprechender Installation im Fahrzeug für die Magnete.

Aufgabe der Erfindung ist es, die dynamischen Eigenschaften des Magneten zu verbessern.

Diese Aufgabe wird bei einem Magneten der eingangs genannten Gattung durch die kennzeichnenden Merkmale des Anspruchs 1 gelöst. Dadurch, daß die Spulen in Einzelspulen unterteilt sind, die in Reihe geschaltet und gleichsinnig gewickelt sind, unterstützen sich die Einzelspulen bei der Erzeugung des magnetischen Flusses. Bei einer schnellen Änderung des Spannungswertes wird bei den Einzelspulen, die in enger magnetischer Kopplung zu einer kurzgeschlossenen Kurzschlußspule stehen, durch deren induktiv erzeugten, entgegengerichteten magnetischen Fluß die gesamte Flußänderung im Eisenkern im Bereich dieser Spulen stark herabgesenkt. Die wirksame Induktivität des gesamten Spulensystems ist damit im wesentlichen auf die Induktivität der Teilspulen, die die Pole umgeben, begrenzt. Die Verkleinerung der Induktivität gegenüber den bekannten Magneten ermöglicht eine schnelle Änderung des Stroms und damit der Anziehungskraft. Gleichwohl steht für den stationären Anteil, der nämlich für die langsame Änderung oder die konstante Strombeaufschlagung, der volle, durch sämtliche Spulen erzeugte magnetische Fluß zur Verfügung. Das dynamische Verhalten des Magneten wird verbessert ohne nachteilige Beeinflussung des statischen Verhaltens.

Im einzelnen kann die Erfindung wie folgt vorteilhaft ausgestaltet sein.

Dadurch, daß eine in der Nut des Magneten angeordnete Teilspule als das Magnetjoch umschließende Rückenspule ausgebildet ist, während zwei andere Teilspulen als den Magnetpol umschließende Teilspulen ausgebildet sind, ergibt sich für die Rückenspule eine enge Kopplungsmöglichkeit zu der Kurzschlußspule. Außerdem ist wegen des räumlichen Abstandes von den die Pole umschließenden Spulen hier nur eine geringe Kopplung vorhanden.

Durch die Ausführung des Jochs aus massivem Eisen wird die Kurzschlußwirkung unterstützt, so daß die Kurzschlußspulen selbst geringer dimensioniert werden können und damit mehr Raum für die Spulenwicklung für die das Magnetfeld erzeugenden Teilspulen zur Verfügung steht.

Vorteilhaft ist das Magnetjoch von einer als geschlossener Kupfermantel ausgebildeten Kurzschlußspule umgeben, auf die die Rückenspule aufgewickelt ist und die Rückenspule von einem weiteren, als geschlossener Kupfermantel ausgebildeten Kurzschlußspule umgeben. Diese Ausbildung der Kurzschlußspulen ist bei enger magnetischer Kopplung zur Rückenspule wirksam, raumsparend und einfach im Aufbau.

Durch die Fertigung der Rückenspule aus parallel zum Magnetjoch verlaufendem Bandmaterial verlaufen magnetische Felder in der Nut parallel zu den einzelnen Bändern, so daß die Erzeugung von Induktionsströmen im Spulenmaterial bei Änderungen der Feldstärke unterdrückt wird.

Die die Magnetpole umfassenden Teilspulen bestehen zweckmäßig aus parallel zu den Seitenflächen der Magnetnut verlaufendem Bandmaterial, wodurch einer Ausbreitung des magnetischen Feldes im oberen Teil der Nut durch den im quer zur Ausbreitungsrichtung des Feldes angeordneten Bandmaterial induzierten Wirbelstrom entgegengewirkt wird.

Im folgenden wird anhand einer Zeichnung ein Ausführungsbeispiel der Erfindung erläutert.

Es zeigen im einzelnen

Figur 1 einen senkrechten Schnitt durch einen Wechselpolmagneten,

Figur 2 einen Schnitt durch den Magneten gemäß der Schnittlinie A-A der Figur 1,

Figur 3 eine perspektivische, vereinfachte Darstellung eines Teils des Magneten mit zwei Polen und mit dem zugehörigen Jochabschnitt und der grundsätzlichen Anordnung und Schaltung der Spulen,

Figur 4 das Ersatzschaltbild der Spulenanordnung nach Figur 3,

Figur 5 das Ersatzschaltbild mit den im stationären Fall — bei langsamen Änderungen von u — wirksamen Induktionen,

Figur 6 das Ersatzschaltbild mit den bei dynamischen — schnellen Änderungen von u wirksamen Selbstinduktionen und

Figur 7 die Verteilung des magnetischen Flusses in dem Teilmagneten nach Figur 3 und in einem Langstator.

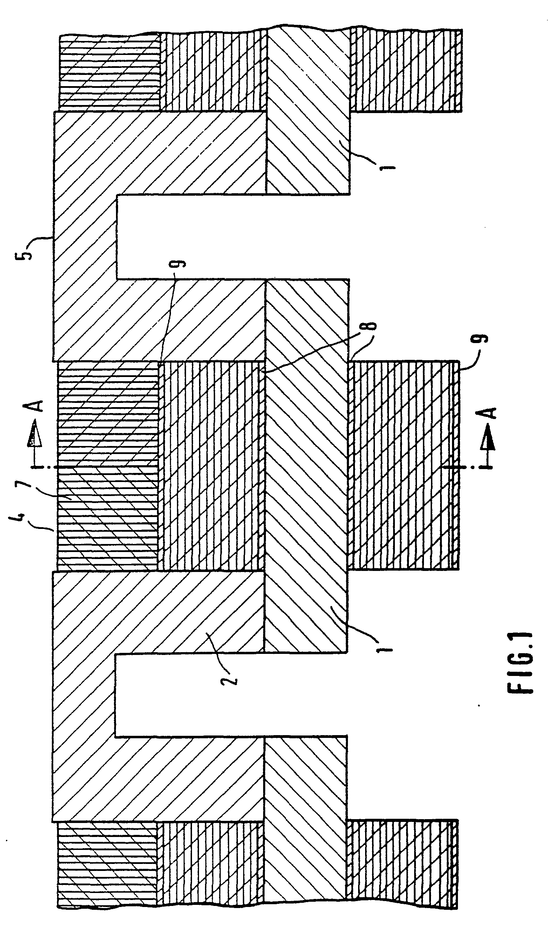

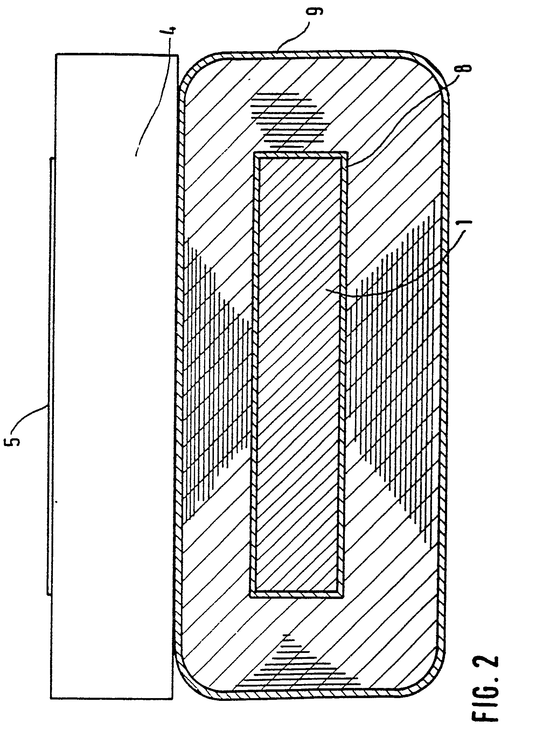

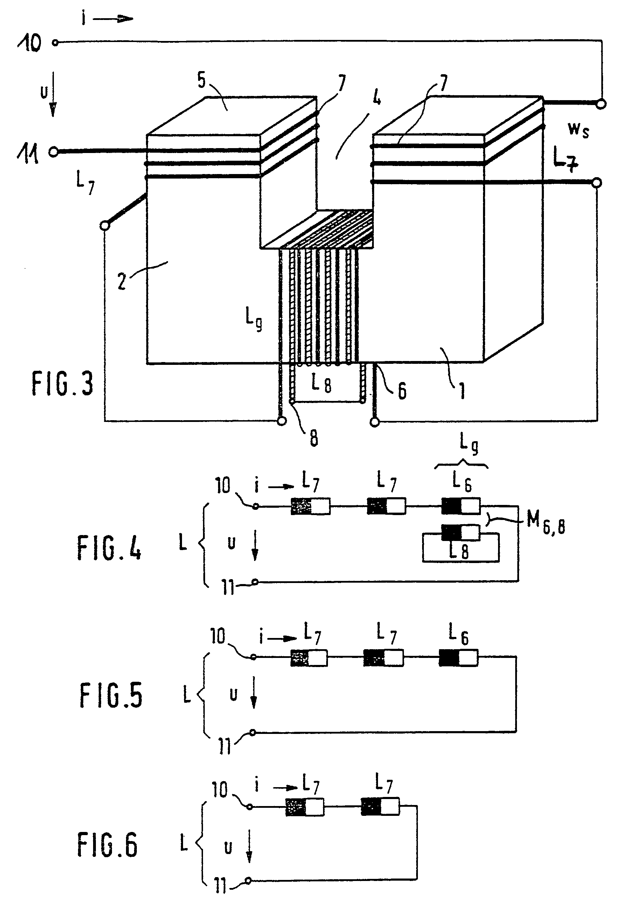

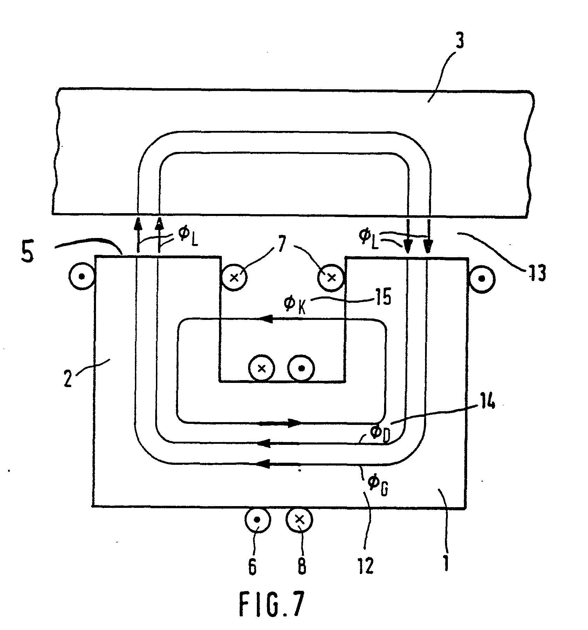

Der Wechselpolmagnet mit einem Magnetjoch 1 und Magnetpolen 2 dient zur Erzeugung der Tragkraft für ein Magnetschwebefahrzeug gegenüber einem Langstator 3 (Figur 7). Er hat mehrere quer zur Richtung des Langstators 3 verlaufende Nuten 4 (Figuren 1 und 3), die an ihrer dem Langstator 3 gegenüberliegenden Polebene 5 offen sind und in denen die Leiter zugeordneter Magnetspulen verlegt sind. Die Magnetspulen sind in Einzelspulen 6,7 unterteilt, die in Reihe geschaltet (Figur 3) und gleichsinnig gewickelt sind. Die beiden Einzelspulen 7 umfassen die Magnetpole 2. Die das Magnetjoch 1 umfassende Rückenspule 6 steht in enger magnetischer Kopplung mit den Kurzschlußspulen 8,9 (Figuren 1 und 3). Die die Magnetpole 2 umschließenden Einzelspulen 7 reichen bis nahezu an die Polebene 5 (Figuren 1 und 2).

Das Magnetjoch 1 ist aus massivem Eisen ausgeführt. Dies unterstützt die Wirkung der Kurzschlußspulen 8 und 9 durch Wirbelstrombildung. Die Kurzschlußspulen 8 und 9 sind geschlossene Kupfermäntel, wobei die Kurzschlußspule 8 das Magnetjoch 1 umfaßt und die Kurzschlußspule 9 die Rückenspule 6 des Magnetjochs 1. Die Rückenspule 6 ist aus parallel zum Magnetjoch 1 verlaufendem Bandmaterial gefertigt, so daß einer durch die Einzelspulen 7 verursachten magnetischen Streuflußänderung, die im Bereich der Rückenspule 6 verläuft, nur ein geringer Widerstand entgegengesetzt wird. Die die Magnetpole 2 umfassenden Einzelspulen 7 bestehen aus parallel zu den Seitenflächen der Nut 4 verlaufendem Bandmaterial und setzen hierdurch einer von der Polebene 5 ausgehenden magnetischen Flußänderung einen großen Widerstand entgegen.

Die physikalische Wirkungsweise bei langsamer und bei schneller Änderung der Spannung u wird anhand der Figur 3 und der zugehörigen Ersatzschaltbilder der Figuren 4 bis 6 erläutert.

Mit $L_7$ sind die Induktivitäten der Einzelspulen, die die Magnetpole 2 umgeben, bezeichnet. Die Induktivität $L_9$ ergibt sich aus der Selbstinduktivität $L_6$ der Magnetrückenspule 6, der Induktivität $L_8$ der Kurzschlußspule 8 sowie der magnetischen Kopplung $M_{6,8}$ zwischen den Spulen 6 und 8. Die an den Anschlüssen 10, 11 wirksame Gesamtinduktivität L ergibt sich aus der Reihenschaltung der Induktivitäten $L_7$ und der Induktivität $L_9$.

Fließt in der Anordnung ein Gleichstrom i, so addieren sich die magnetischen Flüsse der Einzelspulen 6 und 7 und liefern in dem Luftspalt zwischen der Polebene 5 und dem Langstator 3 (Figur 7) eine entsprechende Luftspaltinduktion, die zu der Magnetkraft führt. In dieser Betriebsart unterscheidet der Magnet sich in seiner Wirkung nicht von den nach dem Stand der Technik bekannten Anordnungen. Die an den Klemmen 10, 11 wirksame Gesamtinduktivität L ist für diesen Fall entsprechend der Figur 5 die Summe der Induktivitäten $L_7$ und der Induktivität $L_6$ der Rückenspule 6.

Bei schnellen Änderungen der den Magnetstrom i treibenden Spannung u wird die Kurzschlußspule 8 wirksam. Eine angenommene sprungförmige Erhöhung der Spannung u hat eine Erhöhung des Stromes i zur Folge. Auf Grund dieser Stromerhöhung in der Rückenspule 6 ergibt sich eine Erhöhung des Magnetflusses in dem Joch 1. Die Erhöhung des magnetischen Flusses hat in der Kurzschlußspule 8 einen induzierten Strom zur Folge, deren magnetischer Fluß dem induzierenden magnetischen Fluß der Rückenspule 6 entgegenwirkt, so daß die zeitliche Änderung des resultierenden Gesamtflusses im Magnetjoch 1 wesentlich verlangsamt wird. Durch die geringe zeitliche Flußänderung ändert sich die Spannung an der Rückenspule 6 ebenfalls nur langsam. Es wird nur eine geringe Gegenspannung induziert. Damit ist die Erhöhung der Spannung u vollständig an den Einzelspulen 7, die die Magnetpole 2 umfassen, wirksam und führt zu einer schnellen Stromerhöhung in dem aus den in Reihe geschalteten Spulen 6 und 7 bestehenden Spulensystem. Das Ersatzschaltbild der Fig. 6 für die schnelle Änderung der Spannung u läßt erkennen, daß die Rückenspule 6 nicht wirksam ist, sondern nur die die Magnetpole umfassenden Einzelspulen 7. Die an den Klemmen 10 und 11 wirksame Gesamtinduktion setzt sich nur aus den Induktionen $L_7$ der Einzelspulen 7 zusammen. Durch die Stromerhöhung erfolgt eine Flußerhöhung in dem Luftspalt zwischen den Polebenen 5 und dem Langstator 3. Diese hat eine entsprechend schnelle Änderung der Magnetkraft zur Folge.

In Figur 7 ist dieser Zusammenhang anhand einer prinzipiellen Darstellung der in dem System auftretenden magnetischen Flüsse erläutert. Zeitlich vor der angenommenen Erhöhung der Spulenspannung u ergibt sich der magnetische Fluß $\varnothing_G$ 12. Dessen Verlauf durch den Gesamtmagneten, den Luftspalt 13 und den Langstator 3 ist angedeutet. Im Luftspalt 13 ergibt sich eine durch den entsprechenden Fluß $\varnothing_G$ 12 bestimmte magnetische Kraft. Nach einer schnellen Erhöhung der den Strom i treibenden Spannung u ergibt sich die entsprechende Erhöhung des Spulenstromes i und der zusätzliche, dynamische Flußanteil $\varnothing_D$ 14. Der durch die Kurzschlußspule 8 erzeugte Gegenfluß $\varnothing_K$ 15 verläuft durch die Nut 4, die Magnetpole 2 und wirkt in dem Magnetjoch 1 dem Flußzuwachs $\varnothing_D$ 14 der Rückenspule 6 entgegen. Dies hat zur Folge, daß die Stromerhöhung in der Rückenspule 6 keine unerwünschte Gegenspannung zur Folge hat. Wegen des Schließens des magnetischen Flusses $\varnothing_K$ der Kurzschlußspule 8 im Nutraum 4 schwächt dieser Fluß den Fluß $\varnothing_L$ im Luftspalt 13 nicht, so daß dort der Fluß $\varnothing_G$ 12 vor der Spannungserhöhung und der dynamische Flußanteil $\varnothing_D$ 14 die schnelle Erhöhung der Anzugskraft bewirken können.

## Patentansprüche

1. Wechselpolmagnet mit einem Magnetjoch (1) und Magnetpolen (2) für die Erzeugung der Tragkraft für ein Magnetschwebefahrzeug gegenüber einem Langstator (3) mit mehreren, quer zur Langstatorrichtung quer verlaufenden Nuten (4), die an ihrer dem Langstator (3) gegenüberliegenden Polebene (5) offen sind und in denen die Leiter zugeordneter Magnetspulen verlegt sind, dadurch gekennzeichnet, daß die Spulen in Einzelspulen unterteilt sind, die in Reihe geschaltet und gleichsinnig gewickelt sind, daß zumindest eine der Einzelspulen (7) den Magnetpol (2) umfaßt und daß zumindest eine der anderen Einzelspulen (6) in enger magnetischer Kopplung zu zumindest einer weiteren kurzgeschlossenen Kurzschlußspule (8, 9) steht.

2. Wechselpolmagnet nach Anspruch 1, dadurch gekennzeichnet, daß eine der in der Nut des Magneten angeordneten Einzelspulen als das Magnetjoch (1) umschließende Rückenspule (6) ausgebildet ist, und daß zwei andere Einzelspulen als die Magnetpole (2) umschließende Einzelspulen (7) ausgebildet sind.

3. Wechselpolmagnet nach Anspruch 1 oder 2, dadurch gekennzeichnet, daß das Magnetjoch (1) aus massivem Eisen ausgeführt ist.

4. Wechselpolmagnet nach einem der Ansprüche 1 bis 3, dadurch gekennzeichnet, daß das Magnetjoch (1) von einer als geschlossener Kupfermantel ausgebildeten Kurzschlußspule (8) umgeben ist, auf die die Rückenspule (6) aufgewickelt ist und daß die Rückenspule (6) von einer weiteren, als geschlossener Kupfermantel ausgebildeten Kurzschlußspule (9) umgeben ist.

5. Wechselpolmagnet nach einem der Ansprüche 1 bis 4, dadurch gekennzeichnet, daß die Rückenspule (6) aus parallel zum Magnetjoch (1) verlaufendem Bandmaterial gefertigt ist.

6. Wechselpolmagnet nach einem der Ansprüche 1 bis 5 dadurch gekennzeichnet, daß die die Magnetpole (2) umfassenden Einzelspulen (7) aus parallel zu den Seitenflächen der Nut (4) verlaufendem Bandmaterial bestehen.

## Claims

1. Heteropolar magnet with a magnet yoke (1) and magnet poles (2) for the production of the supporting force for a magnetic levitation vehicle relatively to a long stator (3), with a plurality of slots (4) which are disposed transversely with respect to the long stator direction, which are open at their pole plane (5) opposite the long stator (3), and in which the conductors of associated magnet coils are situated, characterised in that the coils are subdivided into individual coils which are series-connected and are wound in the same direction, that at least one of the individual coils (7) surrounds the magnet pole (2), and that at least one of the other individual coils (6) is closely magnetically coupled with at least one further shortcircuited short-circuit coil (8, 9).

2. Heteropolar magnet according to claim 1, characterised in that one of the individual coils which are arranged in the slot of the magnet is constructed as a back coil (6) surrounding the magnet yoke (1), and that two further individual coils are constructed as individual coils (7) surrounding the magnet poles (2).

3. Heteropolar magnet according to claim 1 or 2, characterised in that the magnet yoke (1) is made of solid iron.

4. Heteropolar magnet according to one of claims 1 to 3, characterised in that the magnet yoke (1) is surrounded with a short-circuit coil (8) which is constructed as a closed copper shell and on to which the back coil (6) is wound, and that the back coil (6) is surrounded with a further short-circuit coil (9) which is constructed as a closed copper shell.

5. Heteropolar magnet according to one of claims 1 to 4, characterised in that the back coil (6) is made from strip material disposed parallel to the magnet yoke (1).

6. Heteropolar magnet according to one of claims 1 to 5, characterised in that the individual coils (7) surrounding the magnet poles (2) consist of strip material disposed parallel to the side surfaces of the slot (4).

## Revendications

1. Inducteur hétéropolaire à culasse (1) et pôles magnétiques (2) pour la production de la force portante pour un véhicule à suspension magnétique en face d'un stator long (3), avant plusieurs encoches (4) s'étendant transversalement, perpendiculairement à la direction du stator, qui sont ouvertes à leur plan polaire (5) situé en face du stator (3) et dans lesquelles sont placés les conducteurs de bobines associées, caractérisé par le fait que les bobines sont divisées en bobines élémentaires qui sont connectées en série et enroulées dans le même sens, qu'au moins une des bobines élémentaires (7) entoure le pôle magnétique (2) et qu'au moins une des autres bobines élémentaires (6) est couplée magnétiquement de manière serrée avec au moins une bobine de court-circuit, court-circuitée (8, 9).

2. Inducteur hétéropolaire selon la revendication 1, caractérisé par le fait qu'une des bobines élémentaires placée dans son encoche est une bobine dorsale (6) entourant la culasse (1), et que deux autres bobines élémentaires sont des bobines élémentaires (7) entourant les pôles magnétiques (2).

3. Inducteur hétéropolaire selon l'une des revendications 1 et 2, caractérisé par le fait que la culasse (1) est en fer massif.

4. Inducteur hétéropolaire selon l'une des revendications 1 à 3, caractérisé par le fait que la culasse (1) est entourée d'une bobine de court-circuit (8) constituée d'une chemise en cuivre fermée sur laquelle est enroulée la bobine dorsale (6), et que la bobine dorsale (6) est entourée d'une autre bobine de court-circuit (9) constituée d'une chemise en cuivre fermée.

5. Inducteur hétéropolaire selon l'une des revendications 1 à 4, caractérisé par le fait que la bobine dorsale (6) est faite de bande s'étendant parallèlement à la culasse (1).

6. Inducteur hétéropolaire selon l'une des revendications 1 à 5, caractérisé par le fait que les bobines élémentaires (7) entourant les pôles magnétiques (2) sont constituées de bande s'étendant parallèlement aux faces latérales de l'encoche (4).

FIG.1

EP 0 160 186 B1

FIG. 2

FIG.3

FIG.4

FIG.5

FIG.6

FIG.7